Europäisches Patentamt

(19) European Patent Office

Office européen des brevets

(11) Numéro de publication: **0 162 741**
**A1**

# (12) DEMANDE DE BREVET EUROPEEN

(21) Numéro de dépôt: **85400739.0**

(22) Date de dépôt: **15.04.85**

(51) Int. Cl.⁴: **F 16 C 29/02**
**F 16 C 32/06**

(30) Priorité: **27.04.84 FR 8406636**

(43) Date de publication de la demande:
**27.11.85 Bulletin 85/48**

(84) Etats contractants désignés:
**DE GB IT**

(71) Demandeur: **FOREST-LINE**
**B.P. 25**
**F-12700 Capdenac(FR)**

(72) Inventeur: **Greffioz, André**
**Lasternes Capdenac-le-Haut**
**F-46100 Figeac(FR)**

(72) Inventeur: **Tillement, Pierre**
**Avenue Léo Lagrange**
**F-12300 Capdenac(FR)**

(74) Mandataire: **Loriot, Jacques et al,**
**c/o SA. FEDIT-LORIOT 38, avenue Hoche**
**F-75008 Paris(FR)**

(54) **Dispositif de graissage des surfaces de portée d'organes mobiles de machines.**

(57) L'invention concerne la lubrification des organes de machines.

Le dispositif comporte une poche hydrostatique comprenant une chambre de pression 7 alimentée en huile sous pression et entourée d'une plage de laminage 9 constituée par l'interstice entre les deux surfaces de portée 5, 6. La chambre de pression 7 est entourée d'une première rainure de récupération d'huile 11 et d'une deuxième rainure 13 alimentée en air comprimé, au delà de laquelle se trouve une gorge transversale 16 de récupération des fuites d'huile dans laquelle est logé un racleur 18.

L'invention est applicable au graissage des surfaces de portée de deux organes de machine mobiles, l'un par rapport à l'autre.

FIG.2

EP 0 162 741 A1

## Dispositif de graissage des surfaces de portée d'organes mobiles de machines.

L'invention concerne les dispositifs de graissage des surfaces de portée de deux organes de machine mobiles, l'un par rapport à l'autre, d'un mouvement dans une direction prédéterminée, au moyen d'une poche hydrostatique comprenant au moins une chambre de pression pratiquée dans celle des surfaces de portée des deux organes toujours recouverte par l'autre, alimentée en huile sous pression, et entourée d'une plage de laminage constituée par l'interstice qui s'étend entre les deux surfaces précitées. On rencontre de tels dispositifs, par exemple, entre un chariot et ses glissières de guidage sur un banc, sur une traverse ou sur un montant de machine-outil ou encore entre une broche rotative porte-outil et son logement dans la poupée d'une machine-outil.

L'huile qui s'échappe de la plage de laminage doit être récupérée, ce qui se fait le plus souvent par gravité, mais l'inconvénient majeur de cette solution réside dans le fait qu'une grande surface de la machine est arrosée par cette huile, ce qui augmente les risques de pollution et interdit l'usage de cette technique lorsque la machine doit être maintenue en parfait état de propreté.

Lorsqu'il s'agit d'un chariot mobile sur un banc horizontal, la surface mouillée par l'huile est très grande et l'on est obligé d'utiliser, de chaque côté du chariot, des protecteurs télescopiques étanches. De plus, si le banc est de grande longueur, par exemple de l'ordre d'une vingtaine de mètres, il convient de disposer un bac de récupération d'huile à chacune de ses deux extrémités et il faut prévoir un équipement hydraulique lourd et encombrant pour recycler l'huile dans le bac principal où le niveau doit être maintenu correct en permanence.

2

Dans le cas d'un organe mobile verticalement sur un montant, l'écoulement de l'huile le long des glissières impose l'utilisation de deux protecteurs télescopiques supérieur et inférieur pour éviter la pollution, ce qui présente d'ailleurs parfois l'inconvénient de réduire la course utile dudit organe ; de plus, il convient de prévoir aussi un équipement pour canaliser et récupérer l'huile des glissières.

Le problème est encore plus ardu lorsqu'il s'agit d'un chariot mobile sur une traverse horizontale ; pour éviter les écoulements d'huile susceptibles de polluer la machine ou les pièces à travailler, on a eu recours jusqu'ici, à des goulottes de récupération qu'on disposait en-dessous des glissières de la traverse, mais une telle solution n'est pas très élégante.

Le but de l'invention est de réaliser un dispositif de graissage qui soit étanche et qui permette une récupération facile de l'huile s'échappant de la plage de laminage.

A cet effet, suivant l'invention, la plage de laminage présente une première rainure de récupération d'huile qui entoure la chambre de pression et qui présente un orifice d'évacuation, ainsi qu'une deuxième rainure qui entoure la première et qui est alimentée en air comprimé, puis, au-delà de cette deuxième rainure dans chacun des deux sens de la direction précitée de déplacement relatif des deux organes de machine, une gorge transversale de récupération des fuites d'huile qui présente aussi un trou d'évacuation et dans laquelle est logé un racleur dont le bord actif porte contre l'autre surface.

Ainsi, pendant le déplacement relatif des deux organes l'huile qui aurait tendance à s'échapper de la plage de laminage vers l'extérieur est récupérée par le racleur et s'écoule, en même temps que de l'air comprimé, par le trou d'évacuation qui se trouve dans la gorge renfermant le racleur ; de là, elle est recyclée vers le bac.

L'invention sera mieux comprise à la lecture de la description qui va suivre et à l'examen des dessins annexés qui montrent, à titre d'exemples, quelques modes de réalisation de l'invention.

Sur ces dessins :

La figure 1 est une vue en plan par dessous d'un chariot qui est mobile sur un banc et qui est muni d'un dispositif de graissage suivant l'invention.

les figures 2et 3 sont des coupes verticales faites respectivement suivant les lignes II-II et III-III de la figure 1,

la figure 4 est une vue en plan par dessous analogue à celle de la figure 1 pour un organe qui peut se déplacer sur un autre suivant deux directions perpendiculaires d'un plan,

la figure 5 est une variante de la figure 4 dans laquelle l'étanchéité est assurée dans n'importe quelle direction d'un plan de portée et la

figure 6 montre une variante du mode de réalisation de la figure 1, dans laquelle un dispositif d'étanchéité unique englobe plusieurs poches hydrostatiques.

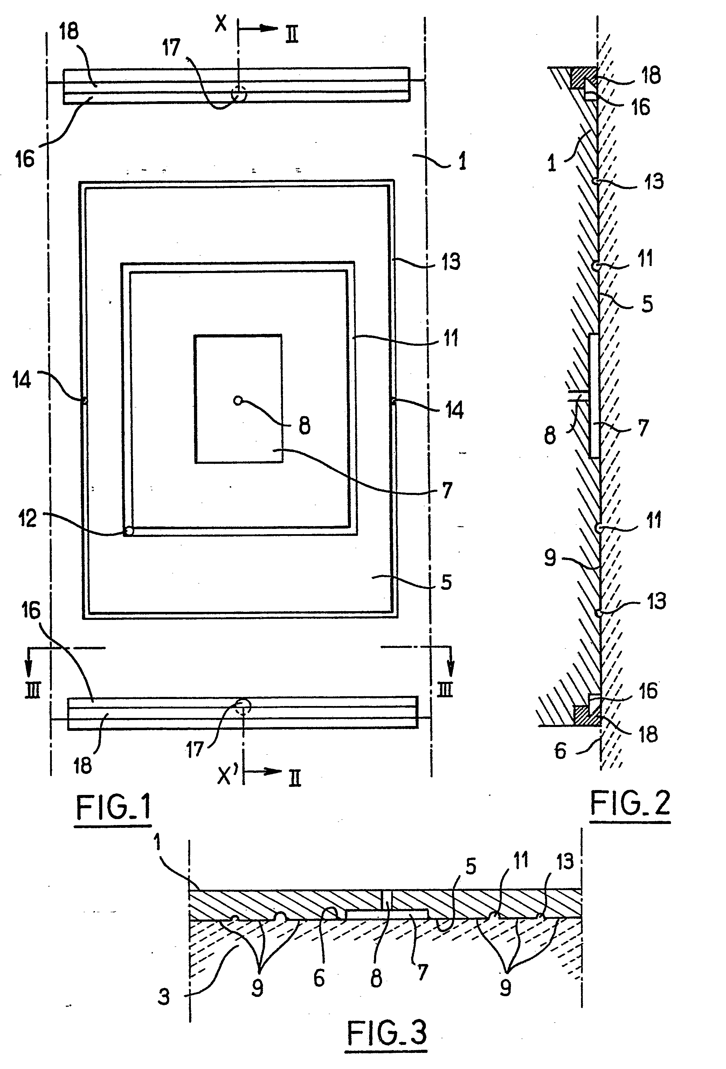

Le dispositif de graissage visible sur les figures 1 à 3 est appliqué à un ensemble de deux organes de machine mobiles, l'un par rapport à l'autre, dans les deux sens d'une direction XX'; en l'occurence, il s'agit d'un chariot 1 monté à coulissement sur un banc horizontal 3. Les moyens de guidage et d'accrochage du chariot sur le banc sont de tout type classique approprié et n'ont pas été représentés. La face inférieure plane 5 du chariot 1 repose sur la face supérieure plane correspondante 6 du banc 3 par l'intermédiaire d'un
film d'huile amené entre ces deux surfaces de portée
à partir d'une poche hydrostatique comprenant une chambre de pression 7 entourée d'une plage de laminage 9
qui s'étend autour de cette chambre dans l'interstice
formé entre les deux surfaces de portée précitées.
La chambre de pression 7, ici de forme rectangulaire,
est creusée dans celle des deux surfaces de portée
qui n'est jamais découverte par l'autre en cours de
fonctionnement, c'est-à-dire la surface de portée 5
du chariot dans l'exemple. La chambre de pression
présente un orifice 8 destiné à être relié à une source
d'huile sous pression appropriée.

La plage de laminage 9 présente une première
rainure de récupération d'huile 11 de configuration
générale rectangulaire qui entoure la chambre
de pression 7 et qui présente un orifice d'évacuation 12
ainsi qu'une deuxième rainure 13 également de configuration générale rectangulaire ici, qui entoure la
première et qui est alimentée en air comprimé par l'intermédiaire d'orifices 14, puis, au delà de cette
deuxième rainure 13 dans chacun des deux sens de la
direction précitée XX', une gorge transversale de récupération des fuites d'huile 16 (dans cet exemple perpendiculaire à la direction XX') qui présente aussi
un trou d'évacuation 17 et dans laquelle est logé un
racleur 18 dont le bord actif porte contre la surface
6 du banc 3. La chambre de pression 7, les deux
rainures 11 et 13, ainsi que la gorge 16 qui renferme
le racleur 18 sont donc toutes creusées dans la partie
de la plage de laminage constituée par la surface
inférieure 5 du chariot 1.

Le fonctionnement du dispositif est le suivant :
L'huile sous pression arrive par l'orifice 8
dans la chambre de pression 7 et passe dans la plage
de laminage 9 s'étendant entre les deux surfaces de portée 5 et 6 du chariot et du banc et elle s'arrête à la première rainure 11 lorsque le chariot ne se déplace pas, car l'air comprimé, qui arrive aussi dans la plage de laminage par la deuxième rainure 13, à la rencontre de l'huile, s'oppose complètement à ce que cette dernière franchisse la première rainure 11 vers l'extérieur. Cette partie d'air comprimé mélangée à l'huile s'échappe par la première rainure 11 et l'orifice d'évacuation 12. L'huile est ensuite récupérée et recyclée dans le circuit de graissage. Une autre partie de l'air comprimé amené par la deuxième rainure 13 se dirige dans la plage de laminage 9 vers l'extérieur et s'échappe en direction latérale tandis qu'elle est retenue en direction longitudinale par les racleurs 18.

Lorsque le chariot 1 se déplace sur le banc 3, c'est-à-dire dans la direction XX', une partie de l'huile qui se trouve dans la plage de laminage entre les deux rainures 11 et 13, est entraînée par adhérence au-delà de la deuxième rainure 13, c'est-à-dire dans la zone de la plage de laminage 9 comprise entre cette deuxième rainure 13 et le racleur 18, mais elle est retenue par ce dernier, de sorte qu'elle ne peut pas s'échapper vers l'extérieur de la partie de la surface du banc 6 recouverte par le chariot. La quantité d'huile entraînée par adhérence est d'autant plus grande que la vitesse de déplacement du chariot est elle-même grande. La partie d'huile qui a ainsi franchi la deuxième rainure 13 et qui est parvenue jusqu'au racleur 18 peut s'écouler avec de l'air comprimé par la gorge 16 où est logé ledit racleur et par l'orifice d'évacuation 17. Cette huile peut ainsi être également récupérée et recyclée.

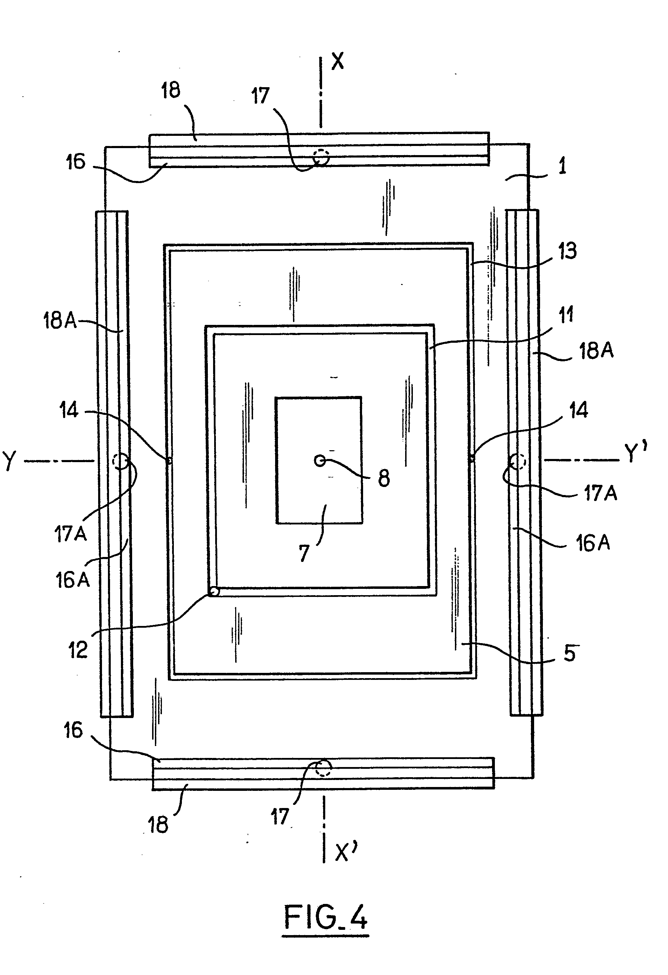

La variante représentée sur la figure 4 ne se différencie du mode de réalisation représenté sur la figure 1 que par le fait qu'elle présente un deuxième degré de liberté dans une direction YY' perpendiculaire à la direction XX', de sorte qu'elle comporte deux racleurs supplémentaires 18A disposés perpendiculairement à la direction YY' de part et d'autre de la plage de laminage, dans des gorges 16A présentant un trou d'évacuation 17A. L'étanchéité entre les deux surfaces est ainsi assurée efficacement dans les deux sens des deux directions XX' et YY'.

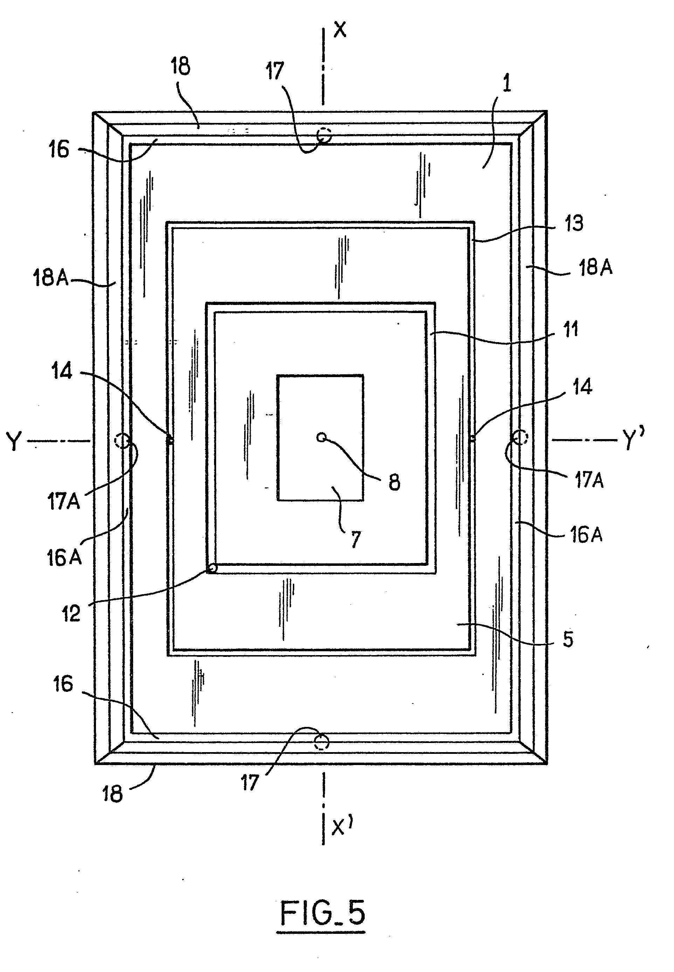

Sur la figure 5, on a représenté une autre variante dans laquelle les quatre racleurs 18, 18A encerclent la plage de laminage complètement, sans solution de continuité, de sorte que l'étanchéité est assurée même pendant des déplacements de direction quelconque de l'organe mobile dans le plan de la surface de l'organe fixe sur laquelle il repose. On a conservé les mêmes chiffres de référence pour désigner les organes correspondants.

S'il s'agissait d'assurer l'étanchéité d'un coulisseau, par exemple de forme prismatique à section carrée ou rectangulaire, on pourrait appliquer l'invention en prévoyant, pour chacune des faces du coulisseau un dispositif tel que celui représenté sur la figure 1 par exemple. Les chambres de pression, les rainures et les gorges de réception des racleurs seraient alors taillées dans les faces du logement dans lequel est monté le coulisseau.

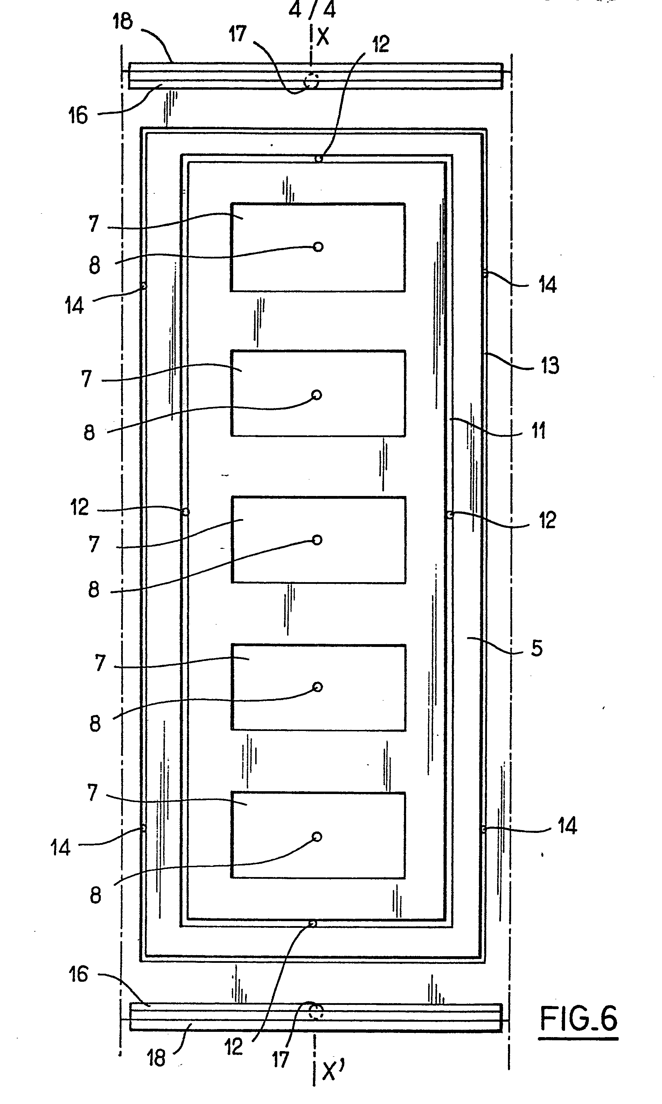

Enfin, dans une autre variante représentée sur la figure 6, les plages de laminage et les rainures 11 et 13 entourent un groupe de plusieurs chambres de pression 7, à savoir : cinq, dans l'exemple, ce qui réduit le prix de revient de l'ensemble du dispositif.

0162741

1

<u>REVENDICATIONS</u>

1. Dispositif de graissage des surfaces de portée de deux organes de machine mobiles l'un par rapport à l'autre dans une direction prédéterminée, au moyen d'une poche hydrostatique comprenant au moins une chambre de pression pratiquée dans celle des surfaces de portée des deux organes toujours recouverte par l'autre, alimentée en huile sous pression, et entourée d'une plage de laminage constituée par l'interstice qui s'étend entre les deux surfaces précitées, la plage de laminage présentant une première rainure de récupération d'huile qui entoure la chambre de pression et qui présente un orifice d'évacuation, tandis qu'une deuxième rainure entoure la première et est alimentée en air comprimé ; ledit dispositif étant caractérisé en ce qu'il comporte, au-delà de la deuxième rainure(13), dans chacun des deux sens de la direction précitée (XX'), une gorge transversale de récupération des fuites d'huile (16) qui présente aussi un trou d'évacuation (17) et dans laquelle est logé un racleur (18) dont le bord actif porte contre l'autre surface (6).

2. Dispositif suivant la revendication 1, pour deux organes de machine mobiles l'un par rapport à l'autre, en outre, dans une deuxième direction transversale par rapport à la direction prédéterminée précitée, caractérisé en ce que la plage de laminage (9) présente, au-delà de la deuxième rainure (13) dans chacun des deux sens de la deuxième direction précitée (Y Y') également une gorge de récupération des fuites d'huile (16A) transversale à cette deuxième direction, dans laquelle est logé aussi un racleur (18A) dont le bord actif porte contre l'autre surface précitée (6), et qui présente aussi un trou d'évacuation (17A).

3. Dispositif suivant la revendication 1, pour deux organes de machine dont l'un est de configuration générale prismatique ou cylindrique et mobile, d'un mouvement longitudinal dans la direction prédéterminée précitée, dans un évidement de configuration conjugué de l'autre organe, caractérisé en ce que les poches hydrostatiques (7) ainsi que les rainures (11, 13), gorges (16) et racleurs (18) y associés, sont présents sur l'ensemble de la surface latérale de l'évidement précité.

4. Dispositif suivant l'une quelconque des revendications 1 à 3, caractérisé en ce que la plage de laminage (9) et les rainures (11, 13) entourent un groupe de plusieurs chambres de pression (7).

0162741

1 / 4

FIG.1

FIG.2

FIG.3

FIG_4

FIG_5

FIG.6

Office européen
des brevets

**RAPPORT DE RECHERCHE EUROPEENNE**

0162741

Numéro de la demande

EP 85 40 0739

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 015 606 (P. KONINGS MACHINEFABRIEK IJZER- EN METAALGIETERIJ) * Page 6, ligne 24 - page 7, ligne 14; figures 1-3 * | 1-3 | F 16 C 29/02 F 16 C 32/06 |
| A | | 4 | |
| Y | FR-A-2 048 241 (JAGO WERKZEUGMASCHINEN GmbH) * Page 3, lignes 17-35; page 5; figure 3 * | 1-3 | |
| A | FR-A-1 594 660 (P. GERARD) | | |
| A | FR-A-2 522 752 (NIKOLAEVSKY KORABLESTROITELNY INSTITUT et al.) | | DOMAINES TECHNIQUES RECHERCHES (Int. Cl.4)  F 16 C |
| A | FR-A-1 551 674 (ARDIE-WERK) | | |
| A | GB-A-1 107 721 (MACHINE TOOL INDUSTRY RESEARCH ASS.) | | |

Le présent rapport de recherche a été établi pour toutes les revendications

| Lieu de la recherche | Date d'achèvement de la recherche | Examinateur |
|---|---|---|
| LA HAYE | 05-08-1985 | BEGUIN C.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82